(19) Europäisches Patentamt
European Patent Office
Office européen des brevets

(11) EP 0 627 113 B1

(12) FASCICULE DE BREVET EUROPEEN

(45) Date de publication et mention
de la délivrance du brevet:
24.05.2000 Bulletin 2000/21

(51) Int. Cl.⁷: **G11B 13/04**, G11B 21/10,
G11B 15/12, G11B 5/49

(21) Numéro de dépôt: 94902843.5

(22) Date de dépôt: 21.12.1993

(86) Numéro de dépôt international:
PCT/FR93/01278

(87) Numéro de publication internationale:
WO 94/15334 (07.07.1994 Gazette 1994/15)

(54) **SUPPORT D'ENREGISTREMENT D'INFORMATIONS, ENREGISTREUR, LECTEUR ET PROCEDE D'ENREGISTREMENT**

DATENAUFZEICHNUNGSTRAGER,AUFZEICHNUNGS,WIEDEGABEGERAT UND VERFAHREN ZUR AUFZEICHNUNG

DATA RECORDING MEDIUM, RECORDER, READER AND RECORDING METHOD

(84) Etats contractants désignés:
DE ES FR GB IT

(30) Priorité: 22.12.1992 FR 9215473

(43) Date de publication de la demande:
07.12.1994 Bulletin 1994/49

(73) Titulaires:
• THOMSON-CSF
75379 Paris Cédex 08 (FR)
• THOMSON multimedia
92648 Boulogne Cédex (FR)

(72) Inventeurs:
• MAURICE, François
F-92402 Courbevoie Cédex (FR)
• COLINEAU, Joseph
F-92402 Courbevoie Cédex (FR)
• HANNA, Charaf
F-92402 Courbevoie Cédex (FR)
• SONRIER, Michel
F-92402 Courbevoie Cédex (FR)

(74) Mandataire: Guérin, Michel et al
Thomson-CSF Propriété Intellectuelle,
13, Avenue du Président Salvador Allende
94117 Arcueil Cédex (FR)

(56) Documents cités:
EP-A- 0 098 358          EP-A- 0 229 732
WO-A-94/15335          GB-A- 1 478 339
US-A- 3 158 846

• PATENT ABSTRACTS OF JAPAN vol. 8, no. 217
(E-270)(1654) 4 Octobre 1984 & JP,A,59 100 678
(OLYMPUS KOGAKU KOGYO K.K.) 9 Juin 1984
• RESEARCH DISCLOSURE ANONYMOUS:
'Tracking utilizing synchronization signals' vol.
333, no. 027, 10 Janvier 1992, EMSWORTH GB,
page 22, XP000281135
• SUPERCOMM / ICC '92 vol. 1 , 14 Juin 1992 ,
CHICAGO, US pages 110 - 114 XP000326860 J.
COLINEAU & H. SOUBARAS 'DIGITAL SIGNAL
PROCESSING FOR A HIGH DENSITY
MULTITRACK TAPE RECORDER'
• PATENT ABSTRACTS OF JAPAN vol. 11, no. 153
(P-577)19 Mai 1987 & JP,A,61 287 056 (TOSHIBA
CORP.) 17 Décembre 1986
• IBM TECHNICAL DISCLOSURE BULLETIN. vol.
7, no. 10 , Mars 1965 , ARMONK NEW YORK US
page 868 R.W. CALFEE 'MAGNETIC
RECORDING NARROW TRACK PLAYBACK
HEAD SYSTEM'
• PATENT ABSTRACTS OF JAPAN vol. 8, no. 129
(P-280)(1566) 15 Juin 1984 & JP,A,59 033 618
(HITACHI SEISAKUSHO K.K.) 23 Février 1984

**Description**

L'invention concerne un support d'enregistrement d'informations, un enregistreur, un lecteur et un procédé d'enregistrement. Elle est applicable notamment aux supports magnétiques ou optiques dans lequel les informations sont arrangées sous forme de pistes parallèles. Elle concerne plus particulièrement un système de suivi de piste.

L'invention est applicable notamment aux systèmes périphériques d'informatiques d'enregistrement-lecture et à tout système de type professionnel.

Notamment, l'invention apporte des solutions pour le suivi de piste et l'élimination de la diaphonie dans les systèmes de lecture à têtes fixes.

Les systèmes actuels présentent une densité de pistes faibles (pas supérieure à 100 μm). Les pistes sont séparées par des gardes vierges de signal pour éviter la diaphonie de lecture. Une telle configuration de pistes est montrée par exemple dans EP-A-0098358. Cette densité est assurée par des têtes moins larges que les pistes. Le contrôle de la position du bord de bande suffit à garantir un bon suivi de piste et l'intéropérabilité des bandes et lecteurs, car les pistes sont larges.

Les systèmes à têtes fixes ne peuvent de ce fait prétendre à une grande densité de pistes.

Dans les systèmes d'enregistrement d'informations numériques, chaque information est constituée d'éléments positifs (ou nuls) et négatifs. Sur les différentes pistes, les nombres d'éléments positifs et négatifs sont différents ce qui donne lieu à une composante continue non nulle.

Pour éviter cela, on passe par un codeur canal qui effectue un transcodage : un certain nombre de bits entrants seront codés sous la forme d'un nombre supérieur de domaines magnétiques, ce qui laisse suffisamment de liberté pour éliminer la composante continue. On utilise par exemple le code 8-10 dans lequel une information à 8 bits est codée à l'aide de 10 bits. Ce qui veut dire que les 256 informations possibles avec un code 8 bits utilisent seulement 256 bits sur 1024 d'un code 10 bits.

Si l'on affecte aux domaines magnétiques des valeurs de +1 ou -1 selon leur sens, on appelle DSV l'intégrale de ces valeurs sur une piste. Certains codes d'enregistrement en 10 bits permettent donc de restreindre les variations de la DSV autour de la valeur nulle.

L'invention modifie ce codage d'informations de façon à permettre un système de suivi de piste.

L'invention concerne donc un support d'enregistrement d'informations dans lequel les informations sont enregistrées selon des pistes situées côte à côte, dans lequel sur chaque piste les informations sont codées sous forme d'une succession de mots-codes, caractérisé en ce que le codage par mots-codes de premières pistes identifiées est réalisé de façon que ces pistes possèdent une composante continue positive tandis que le codage par mots-codes des deuxièmes pistes du support d'enregistrement est réalisé de façon que ces deuxièmes pistes possèdent une composante continue négative.

L'invention concerne aussi un enregistreur d'informations disposées sur un support d'enregistrement selon des pistes situées côte à côte dans lequel sur chaque piste les informations sont codées sous forme d'une succession, caractérisé de mots-codes en ce que le codage par mots-codes de premières pistes identifiées est réalisé par des moyens de codage de façon que ces pistes possèdent une composante continue positive tandis que le codage par mots-codes des deuxièmes pistes du support d'enregistrement est réalisé de façon que ces deuxièmes pistes possèdent une composante continue négative.

L'invention concerne également un lecteur d'informations enregistrées selon des pistes situées côte à côte sur un support d'enregistrement dans lequel les pistes sont réparties en paquets de pistes, caractérisé en ce que:

- un circuit d'intégration intègre pour chaque piste les valeurs des différents signaux enregistrés pour détecter la composante continue de chaque piste ;
- un premier circuit d'addition additionne les résultats d'intégration des premières pistes de chaque paquet de pistes ;
- un deuxième circuit d'addition additionne les résultats d'intégration des dernières pistes de chaque paquet de pistes ;
- un circuit de comparaison compare les résultats des additions des deux circuits d'addition.

Enfin l'invention concerne un procédé d'enregistrement et de lecture d'informations disposées sur un support d'enregistrement selon des pistes situées côte à côte dans lequel sur chaque piste les informations sont codées sous forme d'une succession de mots-codes, caractérisé en ce que le codage par mots-codes de premières pistes identifiées est réalisé de façon que ces pistes possèdent une composante continue positive tandis que le codage par mots-codes des deuxièmes pistes du support d'enregistrement est réalisé de façon que ces deuxièmes pistes possèdent une composante continue négative.

L'invention est définie dans les revendications. Le préambule des revendications 1, 6, 9, et 18 est basé sur EP-A-0098358 cité précédemment.

Les différents objets et caractéristiques de l'invention apparaîtront plus clairement dans la description qui va suivre et dans les figures annexées qui représentent :

- la figure 1, un système de lecture magnétooptique d'une bande magnétique d'enregistrement ;
- la figure 2, un exemple de support d'enregistrement tel qu'une bande magnétique enregistrée selon l'invention ;

- la figure 3, un système de lecture d'une bande magnétique enregistrée selon l'invention ;
- la figure 4, un organigramme d'un système selon l'invention ;
- la figure 5, un système de suivi de piste selon l'invention ;
- les figures 6a à 6e, un système de correction de diaphonie selon l'invention ;
- les figures 7a, 7b, une variante du système de correction de diaphonie selon l'invention.

L'invention va être décrite en utilisant à titre d'exemple un codage binaire 8/10 avec non remise à zéro dans lequel un élément binaire 1 est représenté par un changement d'état de l'enregistrement et un élément binaire 0 est représenté par une absence de changement d'état de l'enregistrement.

Un tel code est désigné par : 8/10 + NRZI (d, k) dans lequel :

d : représente le nombre minimal de bits 0 entre deux bits 1 (par exemple d = 0)

k = représente le nombre maximal de bits 0 entre deux bits 1 (par exemple k = 3).

Selon un codage approprié, il est possible de supprimer la composante continue et d'avoir sur chaque piste une DSV (Digital Sum Value) bornée et moyennement nulle. Pour cela, pour un mot de 8 bits fournissant 256 valeurs possibles, lors du transcodage en 10 bits, on choisit dans les mots de 10 bits 153 mots-codes possédant une composante continue nulle DC = 0 (nombre de bits à 1 égal nombre de bits à 0) complétés par 103 mots-codes DC = +2 appairés avec 103 mots-codes DC = -2. Ces derniers ne diffèrent que par le bit de poids fort et s'utilisent dans une stratégie de codage telle que :

si un mot DC = +2 est apparu, alors le prochain mot qui se présente sera choisi tel que DC = -2 de sorte à rendre la DSV nulle en moyenne. Compte tenu de l'initialisation qui consiste à choisir initialement les mots-codes dans une table où DC = 0 ou +2 le sens de compensation sera toujours tel qu'un mot-code DC = -2 compense un mot-code DC = +2.

Le système de suivi de piste met à profit l'existence de mots-codes à composante continue non nulle DC = +/- 2. L'idée est de rendre la DSV de chaque piste moyennement croissante ou décroissante suivant un schéma prédéfini pour l'ensemble des pistes et créer ainsi une référence piste absolue si on sait distinguer à la lecture les pistes à DSV croissante et celles à DSV décroissante.

Ceci entraine une modification qualifiée d'"altération" sur l'algorithme de codage 8/10. On peut parler de "modulation de la DSV" pour qualifier une variation croissante ou décroissante de celle-ci.

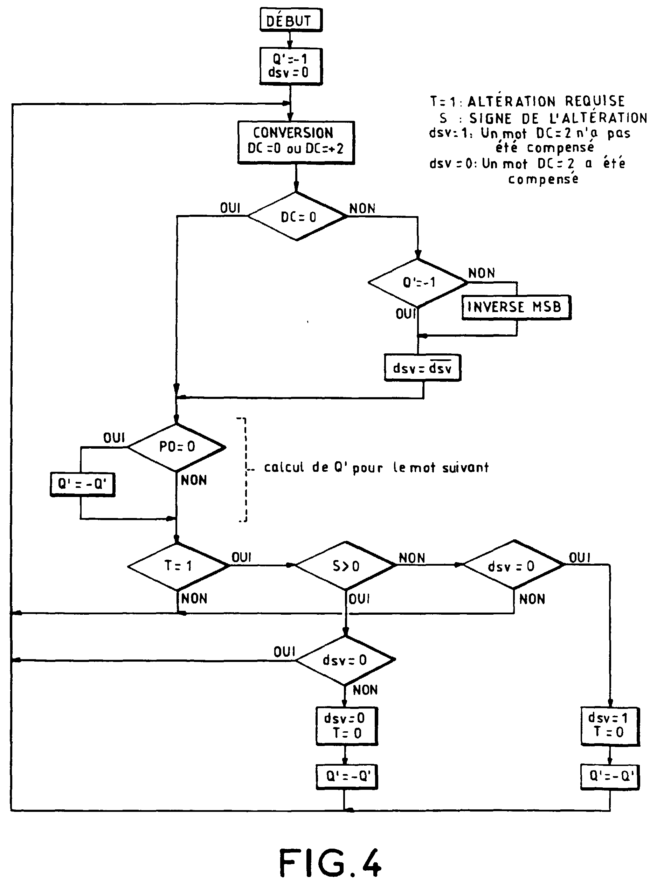

Dans cet algorithme présenté par la figure 4 (pour une piste) :

- T représente l'ordre d'altération. Tant que T = 0 on retrouve l'algorithme du codeur 8/10 initial.
- S définit le sens de la modulation comme à valeur moyenne croissante si S > 0 et décroissante si S < 0.
- dsv est une variable d'état du système qui indique si l'altération est possible dans le sens voulu. dsv est une valeur binaire qui commute à chaque mot.

La méthode selon l'invention pour rendre une DSV croissante consiste à ne pas compenser un mot-code DC = +2 par un mot-code DC = -2 et d'altérer en autorisant donc deux mots-codes DC = +2 consécutifs. Celle pour une DSV décroissante consiste à compenser deux fois un mot-code DC = +2 par un mot-code DC = -2 et autoriser donc deux mots-codes avec DC = -2 consécutifs. L'altération est rendue effective en inversant la variable Q' qui définit le choix entre un mot-code DC = + 2 ou DC = -2 (codeur 8-10).

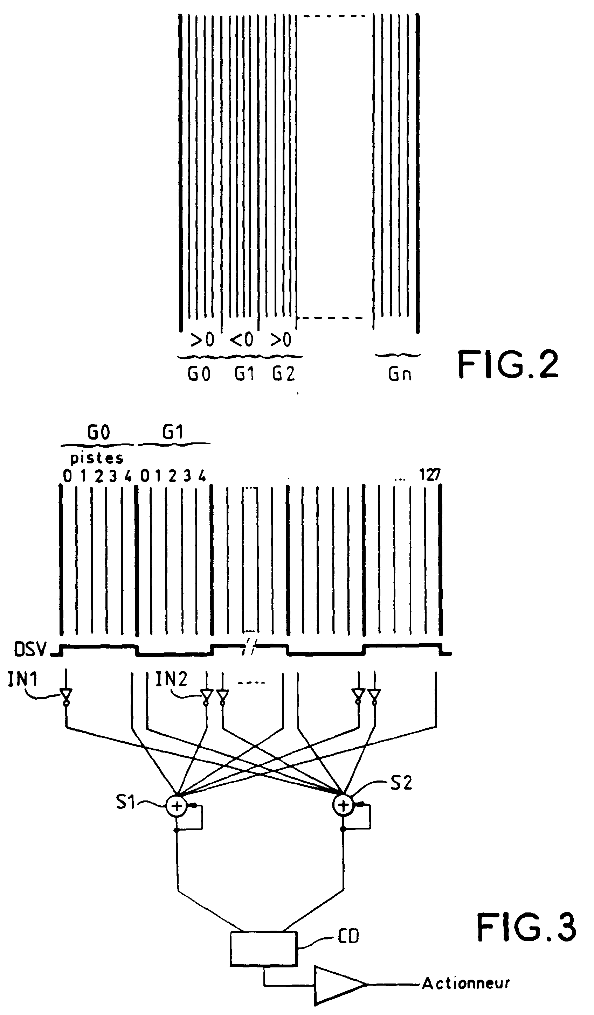

Comme cela est représenté en figure 2, on prévoit de répartir les pistes du support magnétique en groupes (G0, G1, G2, ..., Gn). Par exemple, on prévoit des groupes de cinq pistes.

Les pistes des groupes d'ordre pair sont codées de façon à avoir chacune une composante continue positive. Les pistes des groupes d'ordre impair sont codées de façon à avoir chacune une composante continue négative.

Les pistes d'un groupe peuvent donc être différenciées des pistes des groupes voisins.

A la lecture, le système permet de détecter les groupes dont les lignes sont à composante continue positive de ceux dont les lignes sont à composante continue négative.

Pour la clarté de l'explication, on ne considère que les pistes situées de part et d'autre des frontières définies comme étant le passage d'une piste à composante continue positive à une piste à composante continue négative et réciproquement.

La figure 3 représente un exemple de réalisation d'un circuit de détection d'alignement des têtes de lecture sur les pistes enreglstrées.

Un additionneur de type numérique ou analogique effectue la somme des DSV des pistes avant frontières telles que les pistes O des groupes G0, G1, ... Un autre additionneur S2 effectue la somme des DSV des pistes après frontières telles que les pistes 4 des groupes G0, G1, ...

Des inverseurs tels que IN1 inversent la lecture des pistes après frontière des groupes de rangs pairs et des inverseurs tels que IN2 inversent la lecture des pistes avant frontière des groupes de rangs impairs.

Le sommateur S1 fournit un signal de détection lorsqu'il détecte une composante continue positive sur les pistes avant frontières des groupes de rangs pairs et une composante continue négative sur les pistes avant frontières des groupes de rangs impairs. De même, le sommateur S2 fournit un signal de détection lorsqu'il détecte une composante continue positive sur les pistes après frontières des groupes de rangs pairs et une composante continue négative sur les pistes après frontières des groupes de rangs impairs.

Lorsque les deux sommateurs S1 et S2 fournissent un signal de détection identique, le système de lecture est calé convenablement sur les pistes à lire.

Lorsque l'additionneur S1 fournit un signal de détection supérieur à celui de l'additionneur S2, cela veut dire que le système de lecture est décalé d'au moins une piste dans un sens (vers la gauche sur la figure 3).

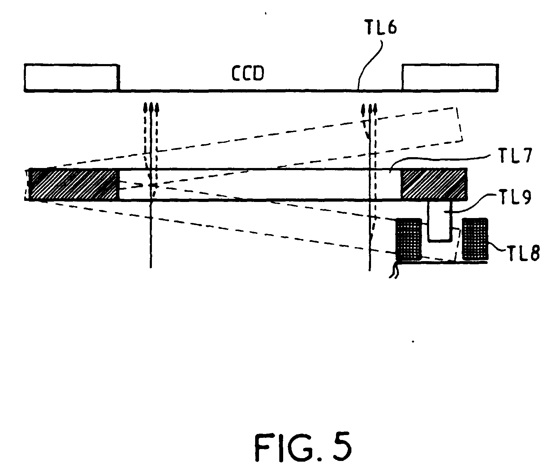

Un circuit CD détecte le sens de décalage et fournit un signal de correction de suivi de piste. Ce signal de correction de suivi de piste agit sur un dispositif de suivi tel que celui représenté en figure 5.

Le circuit de la figure 3 prévoit de traiter les DSV des pistes avant et après frontières. Cependant sans sortir du cadre de l'invention on peut également prévoir de traiter plus de pistes.

Sur la figure 3, à tire illustratif, on a représenté un fonctionnement en parallèle. En fait, on peut réaliser une exploration cyclique des pistes. Cela explique la présence de mémoires D1 et D2 qui rebouclent la sortie de chaque additionneur sur son entrée. Avec ces mémoires, on additionne donc au fur et mesure les DSV des différentes pistes.

Ce système présente une certaine immunité au bruit. On entend principalement par bruit, des pistes temporairement mauvaises qui dans le meilleur des cas fourniraient une suite d'échantillons aléatoires définissant un bruit moyennement nul et d'écart type en N où N est le nombre d'échantillons. L'expérience montre que ce cas "idéal" est très improbable et qu'une piste mauvaise, si elle participe au suivi de piste a tendance à pousser fortement la DSV, précédemment calculée dans un sens ou dans l'autre. Quelques pistes mauvaises peuvent rendre ce calcul incertain et fortement bruité.

Pour s'immuniser contre ce bruit on ne prend en compte par les compteurs que des échantillons déclarés "non en érasure" c'est-à-dire au-dessus d'un certain seull d'amplitude, et on adapte en conséquence le nombre de bits de l'intégrateur.

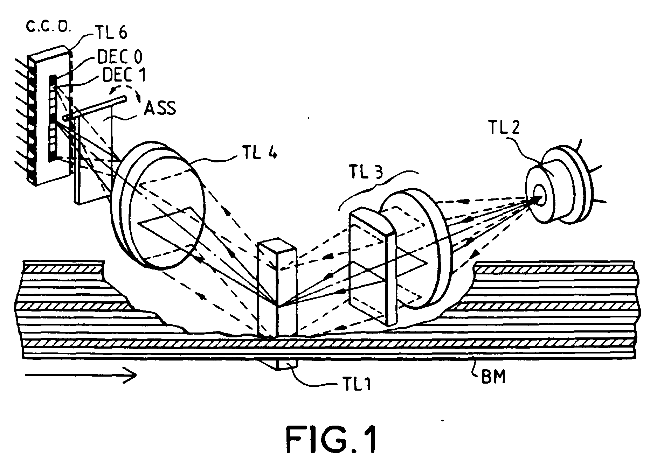

La figure 1 représente schématiquement un système de lecture magnéto-optique d'une bande magnétique.

Un dispositif de lecture magnéto-optique (TL1) tel que décrit dans la Demande de Brevet français n° 89 17313 est placé à proximité d'un support magnétique BM (bande magnétique). Il reçoit un faisceau de lumière polarisée d'un émetteur TL2 et renvoie vers un détecteur TL6 un faisceau dont la direction de polarisation est fonction de l'état de magnétisation de la bande.

Un système de suivi de piste ASS permet d'orienter le faisceau lumineux transmis par le dispositif de lecture magnéto-optique TL1 de façon à ce que les différents faisceaux de lecture des différentes pistes de la bande soient correctement dirigés vers les détecteurs élémentaires appropriés DecO, Dec1. Ce système de suivi de piste ASS est commandé par le signal de suivi de piste mentionné précédemment.

Le système de suivi de piste ASS peut être réalisé comme cela est représenté en figure 5.

Il comporte une lame de verre à face parallèle TL7 disposée sensiblement parallèlement au détecteur TL6.

Il comporte un électro-aimant TL8 et un noyau plongeur TL9 solidaire de la lame TL7. L'électro-aimant reçoit des informations électriques de suivi de piste et permet d'orienter la lame de façon à dévier convenablement le faisceau provenant du transducteur TL1 vers le détecteur TL6 et à affecter à chaque photodiode du détecteur TL6 un faisceau de lecture de piste transmis par le transducteur TL1.

Le système de commande par électro-aimant peut être remplacé par un dispositif de commande piézoélectrique déplaçant soit un élément optique du système d'imagerie, soit le capteur à photoéléments.

De plus, il ne suffit pas que le système de suivi soit orienté de façon à ce que les faisceaux de lecture des pistes transmis par le dispositif MO soit orienté vers les détecteurs Dec0, Dec1, ... il faut encore que ces différents faisceaux soient autant que possible centrés chacun sur un détecteur ou tout au moins positionnés de façon connue sur un détecteur.

En effet en raison du nombre de pistes enregistrées sur le support magnétique, ces pistes sont très proches l'une de l'autre. A la lecture, il petit donc exister une diaphonie, la lecture de chaque piste pouvant être bruitée par les pistes voisines.

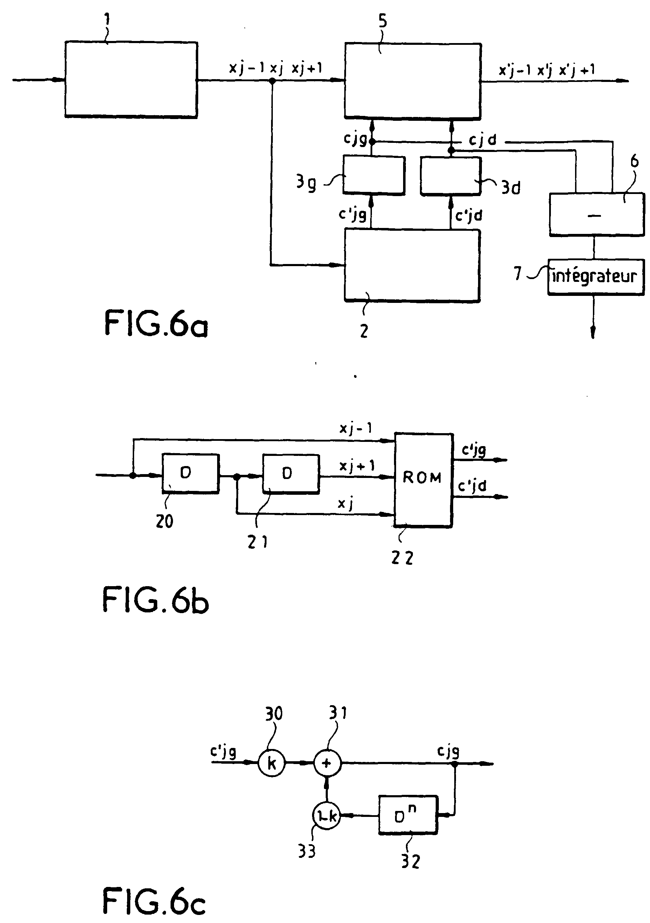

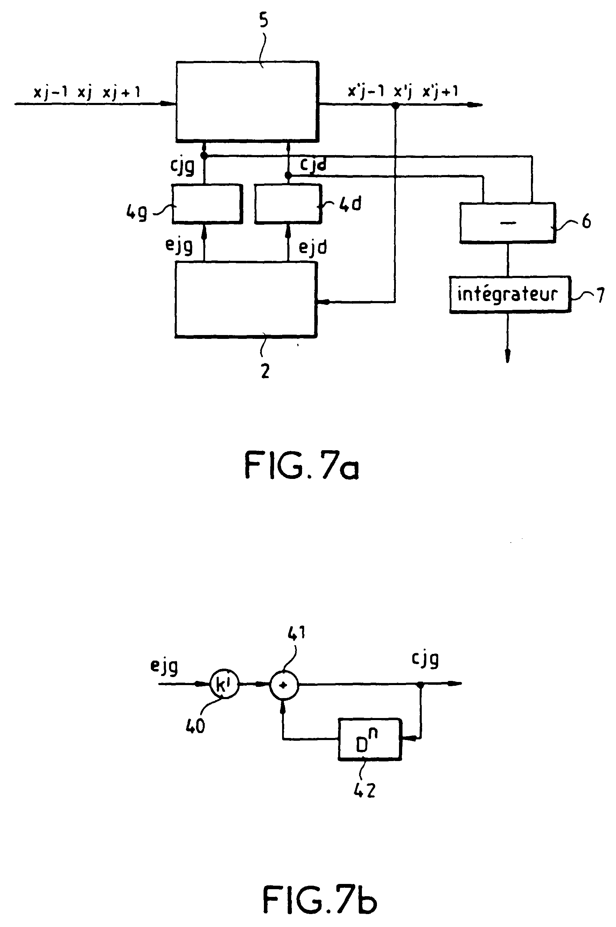

Les figures 6a à 6e et 7a-7b représentent un système permettant d'affiner le suivi de piste en détectant les diaphonies pouvant exister entre les pistes, et pour cela, en équilibrant les diaphonies des différentes pistes entre-piles. Ce système consiste en un ensemble d'opérateurs travaillant séquentiellement sur des échantillons $X_j$ de signal provenant de n pistes voisines.

En se reportant à la figure 6a, on va maintenant décrire un système de correction de diaphonie selon l'invention. Selon le système de lecture de la figure 1, la tête de lecture permet de connaître simultanément les échantillons de toutes les pistes (contrairement aux systèmes à têtes tournantes où la précision d'un passage de tête au suivant est insuffisante). Selon cet exemple simplifié, on supposera que les échantillons d'informations provenant de pistes adjacentes sont traités simultanément.

On considérera les informations provenant des pistes de rang j-1, j et j+1 pour connaître la diaphonie que subi la piste j en raison des pistes j-1 et j+1.

Les différentes Informations lues sur les pistes du support d'enregistrement sont reçues par un circuit de contrôle d'amplitude 1 dont le rôle sera indiqué ultérieurement. Les différents signaux xj-1, xj, xj+1 sont transmis à circuit d'estimation de diaphonie 2 et un circuit de correction de diaphonie 5.

Le circuit d'estimation de diaphonie 2 estime la diaphonie qui peut exister de la piste j-1 sur la piste j et de la piste j+1 sur la piste j. L'estimation d'un coefficient de diaphonie C'jg (diaphonie de la piste j-1 sur la piste j) se fait on effectuant le produit de la valeur du signal xj par l'unité affectée du signe du signal xj-1. On dira plus simplement dans ce qui suit qu'on multiplie le signal xj par le signe du signal xj-1. De même l'estimation du coefficient de diaphonie C'jd (diaphonie de j+1 sur j) se fait en multipliant la valeur du signal xj par le signe du signal xj+1.

La figure 6b donne un exemple de circuit d'estimation de diaphonie dans lequel les signaux xj-1, xj, xj+1 arrivent en série. Des circuits à retard 20, 21 recalent en phase ces signaux et un circuit 22 par exemple de type mémoire ROM calcule les coefficients de diaphonie C'jg et C'jd.

Chaque coefficient de diaphonie C'jg et C'jd ainsi calculé est transmis à un filtre 3g, 3d ou "filtre de lissage" qui permet d'en effectuer la moyenne Cjg ou Cjd au cours du temps. Pour cela, chaque coefficient est combiné au précédent coefficient de diaphonie calculé précédemment pour la même piste.

La figure 6c donne un exemple de filtre de lissage. Ce filtre est expliqué, par exemple, en relation avec le coefficient de diaphonie C'jg. Un circuit multiplicateur 30 multiplie le coefficient C'jg reçu par un coefficient de pondération k, ce coefficient k étant inférieur à 1. Le résultat est transmis à un additionneur 31 qui reçoit sur une deuxième entrée le coefficient de diaphonie calculé précédemment pour la même piste, qui avait été gardé dans la mémoire 32 et qui est multiplié par le coefficient 1-k (circuit multiplicateur 33). On obtient ainsi en sortie un coefficient de diaphonie Cjg qui est filtré.

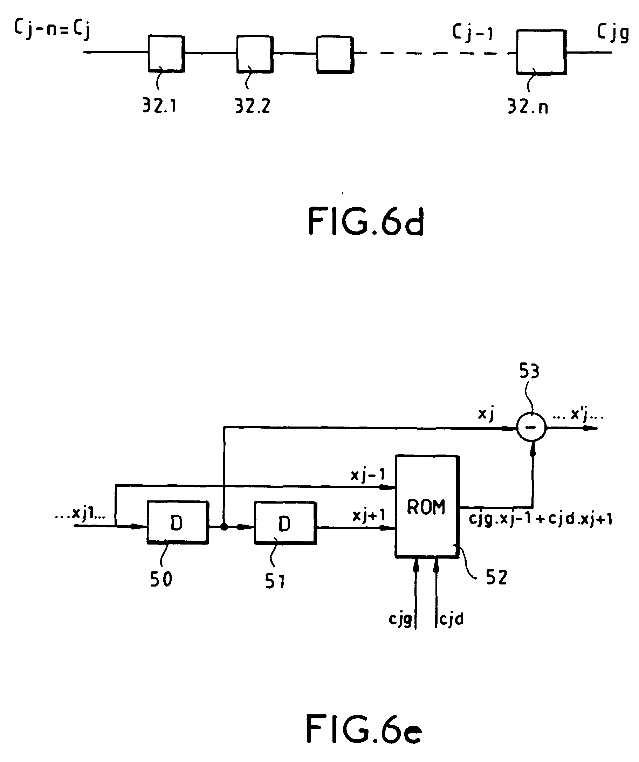

La figure 6d donne la constitution, à titre d'exemple, du circuit mémoire 32. Ce circuit mémoire comporte n circuits mémoire 32.1 à 32.n. Le nombre n est le nombre de pistes du support d'enregistrement. Ainsi à chaque traitement d'une piste les coefficients de diaphonie calculés précédemment pour les autres pistes sont décalés d'un pas mémoire de telle façon que le coefficient Cjg d'une piste calculé à instant donné entre dans la mémoire (côté droit) et qu'il soit présenté aux circuits 33 et 31, n pas mémoires suivant, quand le circuit 31 recevra le coefficient C'jg suivant de la même piste.

Les coefficients de diaphonie Cjg et Cjd ainsi filtrés sont transmis au circuit de correction de diaphonie 5. Celui-ci reçoit également les signaux xj-1, xj et xj+1 et effectue la correction de diaphonie du signal xj en faisant l'opération suivante :

$$xj - (Cjg.xj-1 + Cjd.xj+1)$$

La figure 6e représente un exemple de réalisation du circuit de correction de diaphonie 5. Ce circuit comporte deux circuits à retard 50, 51 permettant de remettre en phase les signaux xj-1, xj, xj+1 qui sont supposés reçus en série. Un circuit 52 de type ROM reçoit les coefficients de diaphonie Cjg et Cjd ainsi que les signaux xj-1 et xj+1, et fournit un échange Cjg.xj-1+Cjd.xj+1. Ce résultat est transmis au circuit de soustraction 53 qui effectue la différence entre ce résultat et la valeur du signal xj. On obtient ainsi le signal corrigé en diaphonie x'j.

Le circuit de la figure 6e permet ainsi de corriger en diaphonie les signaux xj.

Ce circuit permet également de calculer un signal de suivi de piste pour commander le dispositif de suivi de piste TL5 décrit précédemment. Cela est réalisé à l'aide d'un circuit de soustraction 6 connecté aux sorties des filtres 3g et 3d, et qui effectue la différence entre les coefficients de diaphonie. Pour éviter que toute variation brutale des coefficients de diaphonie ait un effet immédiat sur le dispositif de suivi de piste, la différence Cjg-Cjd est intégrée sur les n pistes que possède le support d'enregistrement. On obtient un signal de suivi de piste qui peut être moyenné sur l'ensemble des pistes pour donner un résultat insensible aux phénomènes affectant une piste particulière.

Les différents signaux (xj) admis dans le circuit de la figure 6a ont en principe pour valeur -1 ou +1. Cela n'est pas le cas en réalité. Dans ces conditions, toute différence notable peut fausser le fonctionnement du circuit. C'est pourquoi le circuit de contrôle d'amplitude mentionné précédemment permet de ramener les différents signaux (xj) à une valeur comparable en valeur absolue pour toutes les pistes.

Les figures 7a, 7b représentent une variante préférentielle de réalisation selon l'invention.

Le circuit de la figure 7a comporte un circuit de correction de diaphonie 5 qui reçoit les signaux x-j, xj, xj+1.

Le circuit d'estimation de diaphonie 2 est connecté en sortie du circuit de correction de diaphonie 5. Associé à un filtre intégrateur, il effectue donc un calcul des coefficients de diaphonie a posteriori. En fait, puisque le calcul de diaphonie est fait en sortie du circuit de correction de diaphonie 5, le circuit d'estimation de diaphonie effectue une estimation de diaphonie résiduelle d'un signal supposé déjà corrigé en diaphonie. Ce circuit 2 fonctionne de la même manière que celui de la figure 6a.

Les coefficients de diaphonie résiduelles estimés ejg et ejd sont transmis à des filtres intégrateurs 4g et 4d. Ces filtres intègrent continuement les coefficients de diaphonie.

L'opération réalisée par les filtres intégrateurs est la suivante :

$$Cjg_t = C^1jg_{t-1} + k'e_{jg}$$

c'est-à-dire que, à l'instant t, la nouvelle valeur estimée du coefficient de diaphonie est égale à la valeur à l'instant t-1 corrigé d'une fraction k' de l'erreur résiduelle $e_{jg}$.

Il s'agit d'un processus adaptatif suivant l'algorithme du gradient.

La figure 7b représente un exemple de réalisation de ces filtres. Un circuit 40 pondère à l'aide d'un coefficient k' (inférieur à 1) le coefficient de diaphonie résiduelle (ejg). Le coefficient pondéré est transmis à une entrée d'un circuit d'addition 41 dont la sortie est rebouclée sur une autre entrée par un circuit mémoire 42. Ce circuit mémoire 42 est constitué, par exemple, comme celui représenté en figure 6d. On voit donc que le coefficient de diaphonie résiduelle ejg, pondéré par le coefficient k' est additionné à la valeur du coefficient de diaphonie calculé précédemment pour la même piste.

Les circuits 4g et 4d transmettent alors des coefficients de diaphonie Cjg et Cjd au circuit de correction de diaphonie 5 qui est constitué de la même manière que celui des figures 6a et 6e et qui fonctionne de la même façon.

Le circuit de la figure 7a fournit donc des signaux corrigés en diaphonie x'j.

Comme le circuit de la figure 6a, celui de la figure 7a possède des circuits 6 et 7 qui, à partir des coefficients de diaphonie Cjg et Cjd, fournissent un signal de suivi de piste.

On rappelle que le traitement des signaux de pistes qui vient d'être décrit peut être réalisé séquentiellement pour les différentes pistes.

Un estimateur à posteriori de diaphonie résiduelle ainsi décrit (circuits 1,1') est donc essentiellement le produit de l'échantillon courant (Xj) par le signe de l'échantillon perturbateur (Xj+1) (détection synchrone) on volt donc que le système permet de remédier aux diaphonies entre pistes.

Par ailleurs en ce qui concerne le suivi de pistes, compte tenu des précisions de positionnement mécanique que l'on peut atteindre les frontières de zones à DSV > 0 ou < 0 peuvent être aussi proches que 100 à 200 μm sans créer l'ambiguïté de positionnement.

Le grand nombre de frontières ainsi détectables assure la robustesse du système en présence de pistes manquantes.

Il est important de noter que la modification des règles de gestion de la DSV n'altère on rien la capacité du canal.

L'identification de piste selon l'invention ne procède pas à l'identification d'une piste origine particulière, ce qui constituerait un système fragile, mais détecte des frontières entre petits paquets de pistes caractérisés par une propriété commune.

L'identification de piste selon l'invention est la plus simple possible puisqu'elle n'analyse qu'une piste avant et une piste après frontière. On pourrait en analysant deux pistes ou plus de chaque côté de chaque frontière obtenir la valeur de l'écart à la frontière, en nombre de pistes, et améliorer la performance dynamique du système.

L'invention concerne donc selon un mode de réalisation un système de correction de diaphonie et de suivi de piste ne se traduisant par aucune dégradation de la capacité du signal multipiste, et tolérant aux défauts (piste aléatoirement en erreur). Aucune piste particulière de marquage n'est nécessaire.

Dans un système plus perfectionné, la lecture peut s'effectuer en parallèle sur 3 blocs de 128 pistes. Il est choisi à l'écriture de rendre les DSV's des pistes alternativement croissantes et décroissantes modulo 5 pistes dans un bloc de 128 pistes, et de dupliquer ce schéma dans les deux autres blocs de 128 pistes.

Le système de suivi de piste qui utilise à la lecture un seul de ces blocs est donc transportable d'un bloc à l'autre sans modification.

Une variation modulo 5 permet en l'occurrence de répartir au mieux les frontières DSV croissante/DSV décroissante et DSV décroissante/DSV croissante, minimisant ainsi le nombre de ces transitions par ligne de sélection et par ligne de donnée de la tête matricielle.

## Revendications

**1.** Support d'enregistrement d'informations dans lequel les informations sont enregistrées selon des pistes situées côte à côte, dans lequel sur chaque piste les informations sont codées sous forme d'une succession de mots-codes, caractérisé en ce que le codage par mots-codes de premières pistes identifiées est réalisé de façon que ces pistes possèdent une composante continue positive tandis que le codage par mots-codes des deuxièmes pistes du support d'enregistrement est réalisé de façon que ces deuxièmes pistes possèdent une composante continue négative.

**2.** Support selon la revendication 1, caractérisé en ce que les premières pistes sont réparties sous forme de paquets de pistes consécutives.

**3.** Support selon la revendication 2, caractérisé en ce que le codage est un codage RLL numérique dans lequel les positions numériques à composantes continues nulles représentent chacune une information et chaque position numérique à composante continue positive est appariée avec une position numérique à composante continue négative pour représenter une information, cette information étant ainsi représentée au choix par l'une des deux positions numériques, les premières pistes présentant des positions numériques à composante continue positive et les deuxièmes pistes présentant des positions numériques à composante continue négative.

**4.** Support selon la revendication 1, caractérisé en ce qu'il comporte une bande magnétique.

**5.** Support selon la revendication 1, caractérisé en ce qu'il comporte un disque magnétique ou un disque d'enregistrement optique.

**6.** Enregistreur d'informations disposées sur un support d'enregistrement selon des pistes situées côte à côte dans lequel sur chaque piste les informations sont codées sous forme d'une succession de mots-codes, caractérisé en ce que le codage par mots-codes de premières pistes identifiées est réalisé par des moyens de codage de façon que ces pistes possèdent une composante continue positive tandis que le codage par mots-codes des deuxièmes pistes du support d'enregistrement est réalisé de façon que ces deuxièmes pistes possèdent une composante continue négative.

**7.** Enregistreur selon la revendication 6, caractérisé en ce que les premières pistes sont réparties sous forme de paquets de pistes consécutives.

**8.** Enregistreur selon la revendication 7, caractérisé en ce que le codage est un codage RLL numérique dans lequel les positions numériques à composantes continues nulles représentent chacune une information et chaque position numérique à composante continue positive est appariée avec une position numérique à composante continue négative pour représenter une information, cette information étant ainsi représentée au choix par l'une des deux positions numériques, un circuit choisissant pour les premières pistes les positions numériques à composante continue positive et pour les deuxièmes pistes les positions numériques à composante continue négative.

**9.** Lecteur d'informations enregistrées selon des pistes situées côte à côte sur un support d'enregistrement dans lequel les pistes sont réparties en paquets de pistes, caractérisé en ce que :

- un circuit d'intégration intègre pour chaque piste les valeurs des différents signaux enregistrés pour détecter la composante continue de chaque piste (DSV) ;
- un premier circuit d'addition (S1) additionne les résultats d'intégration des premières pistes de chaque paquet de pistes ;
- un deuxième circuit d'addition (S2) additionne les résultats d'intégration des dernières pistes de chaque paquet de pistes ;
- un circuit de comparaison (CD) compare les résultats des additions des deux circuits d'addition.

**10.** Lecteur selon la revendication 9, caractérisé en ce qu'au moins un inverseur (IN1, IN2) inverse pour chaque paquet le signe de la valeur d'intégration soit de la première piste, soit de la dernière piste.

**11.** Lecteur selon la revendication 10, caractérisé en ce qu'une mémoire reboucle la sortie de chaque additionneur sur une de ses entrées.

**12.** Lecteur d'un support d'enregistrement selon la revendication 9, caractérisé en ce qu'il comprend également :

- un circuit d'estimation de diaphonie (2) recevant au moins un premier signal (xj) provenant directement ou non d'une première piste (j), au moins un deuxième signal (xj-1) provenant directement ou non d'une deuxième piste (j-1) située d'un côté de la première piste (j) au moins un troisième signal (xj+1) provenant directement ou non d'une troisième piste (j+1) située de l'autre côté de la première piste par rapport à la deuxième piste, et calculant un premier coefficient de diaphonie (Cjg) en faisant le produit du premier signal par le signe du deuxième signal et un deuxième coefficient de diaphonie en faisant le produit du premier signal par le signe du troisième signal ;
- un circuit de correction de diaphonie (5) recevant directement le premier signal, le deuxième signal et le troisième et calculant un signal corrigé en diaphonie en soustrayant du premier signal le produit du premier coefficient de diaphonie par le deuxième signal ainsi que le produit du deuxième coefficient de diaphonie par le troisième signal.

**13.** Lecteur selon la revendication 12, caractérisé en ce qu'il comporte un circuit de correction de signaux en amplitude recevant les signaux du support d'enregistrement et les transmettant d'une part au circuit d'estimation de diaphonie et d'autre part au circuit de correction de diaphonie.

**14.** Lecteur selon la revendication 13, caractérisé en ce qu'il comporte un circuit de soustraction connecté au circuit d'estimation de diaphonie, recevant les coefficients de diaphonie, en calculant leur différence et fournissant un signal de correction de suivi de piste.

**15.** Lecteur selon la revendication 12, caractérisé en ce qu'il comporte entre le circuit d'estimation de diaphonie (2) et le circuit de correction de diaphonie (5) un circuit de filtrage (3g, 3d) par coefficient de diaphonie; comportant un circuit de pondération (30) pondérant à l'aide d'un premier coefficient k (k < 1) un coefficient de diaphonie et fournissant ce coefficient ainsi pondéré à une première entrée d'un circuit d'addition (31) dont la sortie est rebouclée sur une deuxième entrée, par un circuit mémoire (32) fournissant un coefficient de diaphonie calculée antérieurement pour la même piste et par un deuxième circuit de pondération pondérant à l'aide d'un deuxième coefficient de pondération (1-k) qui est le complément à 1 du premier coefficient de pondération.

16. Lecteur selon la revendication 12, caractérisé en ce que le circuit d'estimation de diaphonie (2) est connecté à une sortie du circuit de correction de diaphonie (5) et reçoit donc les signaux (xj-1, xj, xj+1) après que ceux-ci aient été traités par le circuit de correction de diaphonie.

17. Lecteur selon la revendication 15, caractérisé en ce qu'il comporte entre le circuit d'estimation de diaphonie (2) et le circuit de correction de diaphonie (5), un circuit de filtrage (4g, 4d) par coefficient de diaphonie ; comprenant un premier circuit de pondération (40) recevant un signal de diaphonie et le pondérant à l'aide d'un coefficient de pondération k', un circuit d'addition (41) recevant sur une première entrée ce signal pondéré et possédant sa sortie rebouclée sur une deuxième entrée par un circuit en mémoire (42) appliquant sur cette deuxième entrée, un coefficient de diaphonie calculé antérieurement pour la même piste.

18. Procédé d'enregistrement et de lecture d'informations disposées sur un support d'enregistrement selon des pistes situées côte à côte dans lequel sur chaque piste les informations sont codées sous forme d'une succession de mots-codes, caractérisé en ce que le codage par mots-codes de premières pistes identifiées est réalisé de façon que ces pistes possèdent une composante continue positive tandis que le codage par mots-codes des deuxièmes pistes du support d'enregistrement est réalisé de façon que ces deuxièmes pistes possèdent une composante continue négative.

19. Procédé selon la revendication 18, caractérisé en ce que les premières pistes sont réparties sous forme de paquets de pistes consécutives.

20. Procédé selon la revendication 19, caractérisé en ce que le codage est un codage RLL numérique dans lequel les positions numériques à composantes continues nulles représentent chacune une information et chaque position numérique à composante continue positive est appariée avec une position numérique à composante continue négative pour représenter une information, cette information étant ainsi représentée au choix par l'une des deux positions numériques ; et en ce qu'on choisit pour les premières pistes les positions numériques à composante continue positive et pour les deuxièmes pistes les positions numériques à composante continue négative.

21. Procédé de lecture d'un support d'enregistrement selon la revendication 18, caractérisé en ce qu'il comporte également les étapes suivantes :

- réception d'au moins des signaux d'une première piste (xj) ainsi que d'une deuxième (xj-1) et d'une troisième (xj+1) pistes situées de part et d'autre de la première piste;
- calcul d'un premier coefficient de diaphonie par multiplication de la valeur d'un signal de la première piste par le signe du signal de la deuxième piste;
- calcul d'un deuxième coefficient de diaphonie par multiplication de la valeur du signal de la première piste par le signe du signal de la troisième piste;
- filtrage du premier et du deuxième coefficient de diaphonie.

22. Procédé selon la revendication 21, caractérisé en ce qu'il comporte une étape établissant une différence entre les deux coefficients de diaphonie de façon à obtenir un signal de correction de suivi de piste.

23. Procédé selon la revendication 22, caractérisé en ce que la différence est intégrée sur un nombre d'opérations correspondant sensiblement au nombre de pistes du support d'enregistrement.

24. Procédé selon la revendication 21, caractérisé en ce qu'il comporte une étape de correction de diaphonie consistant à soustraire d'un signal (xj) de la première piste (j), le produit du premier coefficient de diaphonie filtré (Cjg) par la valeur du signal de la deuxième piste (xj-1) et le produit du deuxième coefficient de diaphonie filtré (Cjd) par la valeur du signal de la troisième piste (xj+1).

25. Procédé selon la revendication 24, caractérisé en ce que le filtrage se fait par pondération par un coefficient k du coefficient de diaphonie calculé et additionne ce coefficient pondéré à un coefficient de diaphonie estimé antérieurement pour la même piste et pondéré par un coefficient 1-k.

26. Procédé selon la revendication 24, caractérisé en ce qu'il comporte après réception des signaux une étape préalable de correction d'amplitude des signaux de façon à normaliser leurs amplitudes.

27. Procédé selon la revendication 24, caractérisé en ce que les étapes de calcul du premier et du deuxième coefficients de diaphonies se font à partir des signaux corrigés en diaphonie de façon à calculer des coefficients de diaphonies résiduelles (ejg, ejd), le filtrage consistant à actualiser à chaque instant la valeur des coefficients de diaphonie Cjg, Cjd par une fraction k' du coefficient de diaphonie résiduelle ejg, ejd.

**Claims**

1. Information recording medium in which the information is recorded in tracks situated side by side, wherein on each track the information is encoded in the form of a series of codewords, characterised in that the encoding by codewords of first identified tracks is realised in such a way that these tracks possess a positive continuous component whereas the encoding by codewords of the second tracks of the recording medium is realised in such way that these second tracks possess a negative continuous component.

2. Medium according to claim 1, characterised in that the first tracks are distributed in the form of packets of consecutive tracks.

3. Medium according to claim 2, characterised in that the coding system is a digital RLL coding system wherein the digital positions having zero continuous components each represent one information item and each digital position having a positive continuous component is matched with a digital position having a negative continuous component so as to represent one information item, said information item being thus represented by a selected one of the two digital positions, the first tracks presenting digital positions with a positive continuous component and the second tracks presenting digital positions with a negative continuous component.

4. Medium according to claim 1, characterised in that it comprises a magnetic tape.

5. Medium according to claim 1, characterised in that it comprises a magnetic disk or an optical recording disk.

6. Information recorder disposed on a recording medium in tracks situated side by side, wherein on each track the information is encoded in the form of a series of codewords, characterised in that the encoding by codewords of first identified tracks is realised by encoding means in such a way that these tracks possess a positive continuous component whereas the encoding by codewords of second tracks of the recording medium is realised in such a way that these second tracks possess a negative continuous component.

7. Recorder according to claim 6, characterised in that the first tracks are distributed in the form of packets of consecutive tracks.

8. Recorder according to claim 7, characterised in that the coding system is a digital RLL coding system wherein the digital positions having zero continuous components in each case represent one information item and each digital position having a positive continuous component is matched with a digital position having a negative continuous component in order to represent one information item, this information item being thus represented by a selected one of the two digital positions, and in respect of the first tracks a circuit chooses the digital positions having a positive continuous component and in respect of the second tracks the digital positions having a negative continuous component.

9. Reader of recorded information in tracks situated side by side on a recording medium wherein the tracks are distributed in packets of tracks, characterised in that:

   - an integrating circuit integrates for each track the values of the different recorded signals so as to detect the continuous component of each track (DSV);
   - a first addition circuit (S1) adds the results of integrating the first tracks of each packet of tracks;
   - a second addition circuit (S2) adds the results of integrating the last tracks of each packet of tracks;
   - a comparator circuit (CD) compares the results of the additions by the two addition circuits.

10. Reader according to claim 9, characterised in that for each packet at least one inverter (N1, N2) inverts the sign of the integration value of either the first track or the last track.

11. Reader according to claim 10, characterised in that a memory (D1, D2) loops the output of each adder to one of its inputs.

12. Reader of a recording medium according to claim 9, characterised in that it also comprises the following:

   - a cross-talk estimation circuit (2) which receives at least one first signal (xj) coming directly or not directly from a first track (j), at least one second signal (xj-1) coming directly or not directly from a second track (j-1) located on one side of the first track (j), at least one third signal (xj+1) coming directly or not directly from a third track (j+1) located on the other side of the first track with respect to the second track, and which computes a first cross-talk coefficient (Cjg) in taking the product of the first signal by the sign of the second signal and a second cross-talk coefficient in taking the product of the first signal by the sign of the third signal;

- a cross-talk correction circuit (5) which directly receives the first signal, the second signal and the third signal and computes a cross-talk corrected signal by subtracting, from the first signal, the product of the first cross-talk coefficient by the second signal as well as the product of the second cross-talk coefficient by the third signal.

13. Reader according to claim 12, characterised in that it comprises a circuit for the amplitude correction of the signals receiving the signals of the recording medium and transmitting them, firstly to the cross-talk estimation circuit and, secondly, to the cross-talk correction circuit.

14. Reader according to claim 13, characterised in that it comprises a subtraction circuit connected to the cross-talk estimation circuit, receiving the cross-talk coefficients and computing their difference and supplying a track-following correction signal.

15. Reader according to claim 12, characterised in that it comprises, between the cross-talk estimation circuit (2) and the cross-talk correction circuit (5), one filtering circuit (3g, 3d) per cross-talk coefficient; comprising a weighting circuit (30) weighting, by means of a first coefficient k (k<1), a cross-talk coefficient and supplying this coefficient thus weighted to a first input of an addition circuit (31) whose output is looped to a second input, by a memory circuit (32) supplying a cross-talk coefficient previously computed for the same track and by a second weighting circuit weighting by means of a second weighting coefficient (1-k) which is the one's complement of the first weighting coefficient.

16. Reader according to claim 12, characterised in that the cross-talk estimation circuit (2) is connected to an output of the cross-talk correction circuit (5) and therefore receives the signals (x-j, xj, x+j) after these signals have been processed by the cross-talk correction circuit.

17. Reader according to claim 15, characterised in that it comprises, between the cross-talk estimation circuit (2) and the cross-talk correction circuit (5), one filtering circuit (4g, 4d) per cross-talk coefficient; comprising a first weighting circuit (40) which receives a cross-talk signal and weights it by means of a weight coefficient k, an addition circuit (41) which receives this weighted signal at a first input and has its output looped to a second input by a circuit in memory (42) applying, to this second input, a cross-talk coefficient previously computed for the same track.

18. Method for recording and reading information disposed on a recording medium in tracks situated side by side, wherein on each track the information is encoded in the form of a series of codewords, characterised in that the encoding by codewords of first identified tracks is realised in such a way that these tracks possess a positive continuous component whereas the encoding by codewords of the second tracks of the recording medium is realised in such a way that these second tracks possess a negative continuous component.

19. Method according to claim 18, characterised in that the first tracks are distributed in the form of packets of consecutive tracks.

20. Method according to claim 19, characterised in that the coding system is a digital RLL coding system wherein the digital positions having zero continuous components in each case represent one information item and each digital position having a positive continuous component is matched with a digital position having a negative continuous component in order to represent an information item, this information item being thus represented by a selected one of the two digital positions; and in that in respect of the first tracks the digital positions having a positive continuous component are chosen and in respect of the second tracks the digital positions having a negative continuous component are chosen.

21. Method of reading a support medium according to claim 18, characterised in that it also comprises the following steps:

- reception of at least signals from a first track (xj) as well as from a second (xj-1) and a third (xj+1) track located on either side of the first track;
- computation of a first cross-talk coefficient by multiplication of the value of a signal of the first track by the sign of the signal of the second track;
- computation of a second cross-talk coefficient by multiplication of the value of the signal of the first track by the sign of the signal of the third track;
- filtering of the first and second cross-talk coefficients.

**22.** Method according to claim 21, characterised in that it comprises a step setting up a difference between the two cross-talk coefficients so as to obtain a track-following correction signal.

**23.** Method according to claim 22, characterised in that the difference is integrated over a number of operations corresponding substantially to the number of tracks of the recording medium.

**24.** Method according to claim 21, characterised in that it comprises a cross-talk correction step consisting in subtracting, from a signal (xj) of the first track (j), the product of the first filtered cross-talk coefficient (Cjg) by the value of the signal of the second track (xj-1) and the product of the second filtered cross-talk coefficient (Cjd) by the value of the signal of the third track (xj+1).

**25.** Method according to claim 24, characterised in that the filtering is done by weighting by a coefficient k of the computed cross-talk coefficient and adds this weighted coefficient to a cross-talk coefficient estimated previously for the same track and weighted by a coefficient 1-k.

**26.** Method according to claim 24, characterised in that it comprises, after reception of the signals, a preliminary step for the amplitude correction of the signals so as to standardise their amplitudes.

**27.** Method according to claim 24, characterised in that the steps of computing the first and second cross-talk coefficients are performed on the basis of the cross-talk corrected signals so as to compute residual cross-talk coefficients (ejg, ejd), the filtering consisting in updating the value of the cross-talk coefficients Cjg, Cjd at each instant by a fraction k' of the residual cross-talk coefficient ejg, ejd.

**Patentansprüche**

**1.** Aufzeichnungsträger für Informationen, die auf einander benachbarten Spuren aufgezeichnet werden, wobei die Informationen auf jeder Spur in Form einer Folge von Kodewörtern kodiert sind, dadurch gekennzeichnet, daß die Kodierung in Form von Kodewörtern auf ersten identifizierten Spuren so erfolgt, daß diese Spuren eine positive Gleichkomponente besitzen, während die Kodierung in Form von Kodewörtern der zweiten Spuren des Aufzeichnungsträgers so erfolgt, daß diese zweiten Spuren eine negative Gleichkomponente besitzen.

**2.** Aufzeichnungsträger nach Anspruch 1, dadurch gekennzeichnet, daß die ersten Spuren in Form von Paketen von aufeinanderfolgenden Spuren verteilt sind.

**3.** Aufzeichnungsträger nach Anspruch 2, dadurch gekennzeichnet, daß die Kodierung eine digitale RLL-Kadierung ist, bei der die digitalen Positionen mit Gleichkomponente null je eine Information darstellen und jede digitale Position mit positiver Gleichkomponente mit einer Position mit negativer Gleichkomponente ein Paar bildet, um eine Information darzustellen, wobei diese Information wahlweise durch eine dieser beiden digitalen Positionen dargestellt wird und die ersten Spuren digitale Positionen mit positiver Gleichkomponente und die zweiten Spuren digitale Positionen mit negativer Gleichkomponente besitzen.

**4.** Aufzeichnungsträger nach Anspruch 1, dadurch gekennzeichnet, daß er ein Magnetband enthält.

**5.** Aufzeichnungsträger nach Anspruch 1, dadurch gekennzeichnet, daß er eine Magnetscheibe oder eine optische Speicherscheibe enthält.

**6.** Aufzeichnungsgerät für Informationen, die auf einem Aufzeichnungsträger in einander benachbarten Spuren aufgezeichnet werden, wobei die Informationen auf jeder Spur in Form einer Folge von Kodewörtern kodiert sind, dadurch gekennzeichnet, daß die Kodierung in Form von Kodewörtern auf ersten identifizierten Spuren durch Kodiermittel so erfolgt, daß diese Spuren eine positive Gleichkomponente besitzen, während die Kodierung in Form von Kodewörtern der zweiten Spuren des Aufzeichnungsträgers so erfolgt, daß diese zweiten Spuren eine negative Gleichkomponente besitzen.

**7.** Aufzeichnungsgerät nach Anspruch 6, dadurch gekennzeichnet, daß die ersten Spuren in Form von Paketen von aufeinanderfolgender Spuren verteilt sind.

**8.** Aufzeichnungsträger nach Anspruch 7, dadurch gekennzeichnet, daß die Kodierung eine digitale RLL-Kodierung ist, bei der die digitalen Positionen mit Gleichkomponente null je eine Information darstellen und jede digitale Position mit einer positiven Gleichkomponente mit einer Position mit einer negativen Gleichkomponente ein Paar bildet, um eine Information darzustellen, wobei diese Information wahlweise durch eine dieser beiden digitalen Positionen dargestellt wird und eine Schaltung für die ersten Spuren die digitalen Positionen mit positiver Gleichkomponente und für die zweiten Spuren die digitalen Positionen mit negativer Gleichkomponente auswählt.

**9.** Wiedergabegerät für in nebeneinander verlaufenden Spuren auf einem Aufzeichnungsträger gespeicherte Informationen, wobei die Spuren in Spurenpakete unterteilt sind, dadurch gekennzeichnet, daß

- eine Integrationsschaltung für jede Spur die Werte der verschiedenen gespeicherten Signale integriert, um die Gleichkomponente jeder Spur (DSV) zu ermitteln,
- eine erste Addierschaltung (S1) die Ergebnisse der Integration der ersten Spuren jedes Paketes von Spuren addiert,
- eine zweite Addierschaltung (S2) die Ergebnisse der Integration der letzten Spuren jedes Paketes von Spuren addiert,
- eine Vergleichsschaltung (CD) die Ergebnisse der Addition der beiden Addierschaltungen vergleicht.

10. Wiedergabegerät nach Anspruch 9, dadurch gekennzeichnet, daß mindestens ein Inverter (IN1, IN2) für jedes Paket das Vorzeichen des Integrationswert entweder der ersten Spur oder der letzten Spur invertiert.

11. Wiedergabegerät nach Anspruch 10, dadurch gekennzeichnet, daß ein Speicher den Ausgang jedes Addierers an einen der Eingänge zurückschleift.

12. Wiedergabegerät für einen Aufzeichnungsträger nach Anspruch 9, dadurch gekennzeichnet, daß es weiter aufweist:

- eine Schaltung (2) zur Abschätzung der Diaphonie, der mindestens ein erstes Signal (xj) unmittelbar oder mittelbar von einer ersten Spur (j), mindestens ein zweites Signal (xj-1) unmittelbar oder mittelbar von einer zweiten Spur (j-1) neben der ersten Spur (j) und mindestens ein drittes Signal (xj+1) unmittelbar oder mittelbar von einer dritten Spur (j+1) zugeführt wird, die sich auf der anderen Seite der ersten Spur im Vergleich zur zweiten Spur befindet, und die einen ersten Diaphoniekoeffizienten (Cjg) durch Bildung des Produkts aus dem ersten Signal und dem Vorzeichen des zweiten Signals sowie einen zweiten Diaphoniekoeffizienten durch Bildung des Produkts aus dem ersten Signal und dem Vorzeichen des dritten Signale berechnet,
- und eine Schaltung (5) zur Korrektur der Diaphonie, der unmittelbar das erste Signal, das zweite Signal und das dritte Signal zugeführt wird und die ein hinsichtlich der Diaphonie korrigiertes Signal berechnet, indem sie vom ersten Signal das Produkt des ersten Diaphoniekoeffizienten mit dem zweiten Signal sowie das Produkt des zweiten Diaphoniekoeffizienten mit dem dritten Signal abzieht.

13. Wiedergabegerät nach Anspruch 12, dadurch gekennzeichnet, daß es eine Schaltung zur Korrektur von Signalen hinsichtlich der Amplitude enthält, die die Signale vom Aufzeichnungeträger empfängt und sie einerseits an die Schaltung zur Abschätzung der Diaphonie und andrerseits an die Schaltung zur Korrektur der Diaphonie übermittelt.

14. Wiedergabegerät nach Anspruch 13, dadurch gekennzeichnet, daß es eine Subtrahierschaltung besitzt, die an die Schaltung zur Abschätzung der Diaphonie angeschlossen ist, die Diaphoniekoeffizienten empfängt und durch Berechnung ihrer Differenz ein Signal zur Korrektur der Spurverfolgung liefert.

15. Wiedergabegerät nach Anspruch 12, dadurch gekennzeichnet, daß es zwischen der Schaltung (2) zur Abschätzung der Diaphonie und der Schaltung (5) zur Korrektur der Diaphonie eine Filterschaltung (3g, 3d) je Diaphoniekoeffizient mit einer Gewichtungsechaltung (30) enthält, die mithilfe eines ersten Gewichtungskoeffizienten k (k<1) einen Diaphoniekoeffizienten gewichtet und diesen so gewichteten Koeffizienten an einen ersten Eingang einer Addierschaltung (31) liefert, deren Ausgang an den zweiten Eingang über eine Speicherschaltung (32), die einen vorher für die gleiche Spur berechneten Diaphoniekoeffizienten liefert, und über eine zweite Gewichtungsschaltung zurückgeschleift ist, die mithilfe eines zweiten Gewichtungskoeffizienten (1-k) gewichtet, der das Komplement des ersten Gewichtungskoeffizienten zum Wert 1 ist.

16. Wiedergabegerät nach Anspruch 12, dadurch gekennzeichnet, daß die Schaltung (2) zur Abschätzung der Diaphonie an einen Ausgang der Schaltung (5) zur Korrektur der Diaphonie angeschlossen ist und somit die Signale (xj-1, xj, xj+1) nach deren Bearbeitung durch die Schaltung zur Korrektur der Diaphonie empfängt.

17. Wiedergabegerät nach Anspruch 15, dadurch gekennzeichnet, daß es zwischen der Schaltung (2) zur Abschätzung der Diaphonie und der Schaltung (5) zur Korrektur der Diaphonie eine Filterschaltung (4g, 4d) je Diaphoniekoeffizienten mit einer ersten Gewichtungsschaltung (40), die ein Diaphoniesignal empfängt und es mithilfe eines Gewichtungskoeffizienten k' gewichtet, sowie mit einer Addierschaltung (41) besitzt, die an einem ersten Eingang dieses gewichtete Signal empfängt und deren Ausgang an einen zweiten Eingang über eine Speicherschaltung (42) rückgeschleift ist, die an diesen zweiten Eingang einen vorher für die gleiche Spur gelieferten Diaphoniekoeffizienten anlegt.

18. Aufzeichnungs- und Wiedergabeverfahren für Informationen, die auf einander benachbarten Spuren eines Aufzeichnungsträgers liegen, wobei die Informationen auf jeder Spur in Form einer Folge von Kodewörtern kodiert sind, dadurch gekennzeichnet, daß die Kodierung in Form von Kodewörtern auf ersten identifizierten Spuren so erfolgt, daß diese Spuren eine positive Gleichkomponente besitzen, während die Kodierung in Form von Kodewörtern auf den zweiten Spuren des Aufzeichnungsträgers so erfolgt, daß diese zweiten Spuren eine negative Gleichkomponente besitzen.

19. Verfahren nach Anspruch 18, dadurch gekennzeichnet, daß die ersten Spuren in Form von Paketen aufeinanderfolgender Spuren verteilt sind.

20. Verfahren nach Anspruch 19, dadurch gekennzeichnet, daß die Kodierung eine digitale RLL-Kodierung ist, bei der die digitalen Positionen mit Gleichkomponente null je eine Information darstellen und jede digitale Position mit positiver Gleichkomponente mit einer digitalen Position mit negativer Gleichkomponente ein Paar bildet, um eine Information darzustellen, wobei diese Information wahlweise durch eine dieser beiden digitalen Positionen dargestellt wird, und daß man für die ersten Spuren die digitalen Positionen mit positiver Gleichkomponente und für die zweiten Spuren die digitalen Positionen mit negativer Gleichkomponente wählt.

21. Verfahren zum Lesen eines Aufzeichnungsträger nach Anspruch 18, dadurch gekennzeichnet, daß es außerdem folgende Verfahrensschritte aufweist:

    - Empfang mindestens der Signale von einer ersten Spur (xj) sowie von einer zweiten Spur (xj-1) und von einer dritten Spur (xj+1), die zu beiden Seiten der ersten Spur liegen,
    - Berechnung eines ersten Diaphoniekoeffizienten durch Multiplizierung des Werts eines Signals von der ersten Spur mit dem Vorzeichen des Signals der zweiten Spur,
    - Berechnung eines zweiten Diaphoniekoeffizienten durch Multiplizierung des Werts eines Signals von der ersten Spur mit dem Vorzeichen des Signals der dritten Spur,
    - Filterung des ersten und des zweiten Diaphoniekoeffizienten.

22. Verfahren nach Anspruch 21, dadurch gekennzeichnet, daß es einen Verfahrensschritt enthält, in dem eine Differenz zwischen den beiden Diaphoniekoeffizienten gebildet wird, sodaß sich ein Korrektursignal für die Spurverfolgung ergibt.

23. Verfahren nach Anspruch 22, dadurch gekennzeichnet, daß die Differenz über eine Anzahl von Operationen entsprechend im wesentlichen der Anzahl von Spuren des Aufzeichnungsträgers integriert wird.

24. Verfahren nach Anspruch 21, dadurch gekennzeichnet, daß es einen Verfahrensschritt der Korrektur der Diaphonie enthält, bei dem von einem Signal (xj) der ersten Spur (j) das Produkt aus dem ersten gefilterten Diaphoniekoeffizienten (Cjg) und dem Wert des Signals der zweiten Spur (xj-1) sowie das Produkt des zweiten gefilterten Diaphoniekoeffizienten (Cjd) und des Werts des Signals der dritten Spur (xj+1) abgezogen wird.

25. Verfahren nach Anspruch 24, dadurch gekennzeichnet, daß die Filterung durch Gewichtung mit einem Koeffizienten k des berechneten Diaphoniekoeffizienten und durch Addition dieses gewichteten Koeffizienten zu einem vorher für die gleiche Spur abgeschätzten und mit einem Koeffizienten 1-k gewichteten Diaphoniekoeffizienten erfolgt.

26. Verfahren nach Anspruch 24, dadurch gekennzeichnet, daß es nach Empfang der Signale einen vorbereitenden Verfahrensschritt der Korrektur der Amplitude der Signale enthält, um ihre Amplituden zu normalisieren.

27. Verfahren nach Anspruch 24, dadurch gekennzeichnet, daß die Verfahrensschritte der Berechnung des ersten und des zweiten Diaphoniekoeffizienten ausgehend von hinsichtlich der Diaphonie bereits korrigierten Signalen erfolgt, sodaß Restdiaphoniekoeffizienten (ejg, ejd) berechnet werden, wobei die Filterung darin besteht, in jedem Augenblick den Wert der Diaphoniekoeffizienten (Cjg, Cjd) mit einem Bruchteil (k') des Restdiaphoniekoeffizienten (ejg, ejd) zu aktualisieren.

FIG.1

>0    <0    >0

G0    G1    G2        Gn

# FIG.2

G0       G1

pistes

0 1 2 3 4 0 1 2 3 4           ... 127

DSV

IN1       IN2    ....

S1          S2

CD

Actionneur

# FIG.3

FIG.4

FIG. 5

FIG.6a

FIG.6b

FIG.6c

$$Cj-n=Cj \qquad\qquad\qquad\qquad\qquad Cj-1 \qquad\qquad Cjg$$

32.1      32.2                      32.n

# FIG.6d

$xj$    53    ... $x'j$...

$xj-1$

... $xj1$ ...    D    D    $xj+1$   ROM   $cjg.xj-1+cjd.xj+1$

50      51          52

$cjg$   $cjd$

# FIG.6e

$x_{j-1}$ $x_j$ $x_{j+1}$ → **5** → $x'_{j-1}$ $x'_j$ $x'_{j+1}$

cjg  cjd

4g  4d

ejg  ejd

**2**

— **6**

intégrateur **7**

## FIG.7a

ejg → $k^i$ **40** → + **41** → cjg

$D^n$ **42**

## FIG.7b